# EUROPEAN PATENT SPECIFICATION

(11) **EP 2 891 469 B1**
(45) Date of publication and mention of the grant of the patent: **14.11.2018**
(21) Application number: 14843294.1
(22) Date of filing: 03.06.2014
(51) Int. Cl.: A61C 8/00, A61C 13/263

(54) **INTEGRATED IMPLANT**
INTEGRIERTES IMPLANTAT
IMPLANT INTÉGRÉ

(30) Priority: 10.09.2013 KR 20130108269
(43) Date of publication of application: 08.07.2015
(73) Proprietor: Wang, Je Won, Baeul 2-ro, Yuseong-gu Daejeon 34034 (KR)
(72) Inventor: Wang, Je Won, Baeul 2-ro, Yuseong-gu Daejeon 34034 (KR)
(74) Representative: Lavoix
(86) International application number: PCT/KR2014/004917
(87) International publication number: WO 2015/037812

(56) References cited:
- EP-A1- 1 797 840
- WO-A1-2004/108007
- WO-A1-2010/106251
- WO-A2-2010/131879
- FR-A1- 2 962 642
- KR-A- 20060 106 941
- KR-A- 20080 049 377
- KR-B1- 100 997 553
- KR-U- 20110 001 342
- KR-U- 20110 001 342
- US-A1- 2011 129 797
- US-B1- 7 207 800

## Description

### [Technical Field]

The present invention relates to an integral-type implant, and more particularly to an integral-type implant in which, although a conventional integral-type implant has a disadvantage that the area of a prosthetic appliance attachment part for the attachment of a prosthetic appliance is reduced in the case that the prosthetic appliance attachment part is excessively milled into an oral cavity for the match with a surrounding tooth combination positioned at a treatment region when the conventional integral-type implant is buried into an alveolar bone and then the prosthetic appliance is treated, so that the final prosthetic appliance may not be attached or may deviate from the position thereof due to bite force even if the final prosthetic appliance is attached, the integral-type implant according to the present invention includes the prosthetic appliance attachment part having a low height of a predetermined or less so that all types of prosthetic appliances having the harmony with surrounding teeth can be attached to the prosthetic appliance attachment part without a milling work in the oral cavity. A prosthetic appliance attachment central hole is formed from an upper end surface of the prosthetic appliance attachment part toward an intraosseous implant part, so that the final prosthetic appliance is simultaneously attached to both of the prosthetic appliance attachment part and the prosthetic appliance attachment central hole, thereby increasing the attachment area, so that the final prosthetic appliance or a customized prosthetic appliance cannot deviate from the position thereof. The customized prosthetic appliance is attached to solve an aesthetic problem, which cannot be solved in the conventional integral-type implant, so that the aesthetic problem can be solved.

### [Background Art]

An implant originally refers to a substitute for an organism of a human body when the organism is lost. However, recently, the implant refers to the implantation of an artificial tooth.

For example document WO2010/106251 shows an integral dental implant with a threaded intra-osseous part, a gum penetration part and a prosthetic attachment part.

The implant is an advanced treatment in which an artificial tooth root formed of titanium, which does not represent a rejection symptom to the human body, is buried into an alveolar bone without the tooth and osseointegrated in order to substitute for the lost tooth, and an artificial tooth is fixed to the artificial tooth root so that the original functions of teeth can be recovered.

The tooth implant was originally performed even in ancient times. An artificial tooth formed of gold and ivory was developed in 16th to 17th centuries, and a metal implant formed of gold, silver, or the alloy of cobalt was developed in the early 20th century.

Although subperiosteal implants and titanium blade implants have been developed and popularized since 1940s, their lifespans were short and the implant success rate was lowered.

Thereafter, after implant osseointegration studied for 15 years by Branemark from Sweden was announced in Toronto Canada in 1982, the implant success rate exceeds 90%, so that the implant osseointegration has been extensively popularized around the world.

Although general prosthetic appliances or dentures damage surrounding teeth and bones as time passes, the implant does not damage tissues to surround teeth.

In addition, the implant has the same function and shape as those of natural teeth, but is not decayed, so that the implant can be used semi-permanently.

Naturally, improper management may produce plug or scale to infect surrounding tissues, which causes periodontal disease.

Further, the implant is expensive, and requires about three to six months until full recovery after implant treatment according to occasions.

The procedure of conventional integral-type implant treatment includes the steps of burying an intraosseous implant part of an integral-type implant into an alveolar bone, attaching a provisional prosthetic appliance for a predetermined time until a gum is recovered after implant osseointegration, performing a milling for a prosthetic appliance attachment part into an oral cavity based on the shape of a final prosthetic appliance to be manufactured after the provisional prosthetic appliance has been removed, performing an impression work to form the final prosthetic appliance, forming a final prosthetic appliance through a mold in a dental technical laboratory or in CAD/CAM, and attaching the final prosthetic appliance to the prosthetic appliance attachment part. The conventional integral-type implant is treated in the above sequence.

Although it is important to perform the treatment of the intraosseous implant part into the alveolar bone, the most important work is to complete the prosthetic treatment so that the final prosthetic appliance can normally perform a masticatory function without deviating from the position thereof by masticatory force after the final prosthetic appliance is attached using a dental adhesive.

If the final prosthetic appliance cannot be attached or deviates from the position thereof by bite force after the attachment of the final prosthetic appliance, the masticatory function is impossible after the prosthetic treatment is performed. Accordingly, the integral-type implant buried into the alveolar bone is removed, and then buried again.

For example, when surrounding teeth project, or when the shape of the surrounding teeth is inclined in one direction, so that the final prosthetic appliance inclined in one direction and matched with the shape of the surrounding teeth must be attached to a prosthetic appliance attachment part, since the surrounding teeth are excessively inclined from an axis of the intraosseous implant part buried into the alveolar bone, the prosthetic appliance attachment part must be subject to excessive milling in an oral cavity in match with the inclination of the surrounding teeth in order to attach the final prosthetic appliance to be formed in match with the combination of the surrounding teeth. In addition, although the final prosthetic appliance is attached to the prosthetic appliance attachment part, which has been subject to the milling, using the dental adhesive, the prosthetic appliance attachment part, which has been subject to the excessive milling, has a small attachment area, so that the final prosthetic appliance may deviate from the position thereof due to horizontal and vertical pressures occurring in masticatory movement.

Accordingly, since the final prosthetic appliance cannot be attached to the prosthetic appliance attachment part, the masticatory function cannot be performed. Therefore, the integral-type implant must be removed and buried again.

According to another example, when the final prosthetic appliance having a low height must be attached to the prosthetic appliance attachment part for the balance with the height of the surrounding teeth, and if the implant osseointegration is performed after the intraosseous implant part of the integral-type implant has been buried into the alveolar bone, the final prosthetic appliance having a low height is manufactured for the combination with the surrounding teeth. Accordingly, the milling work for the prosthetic appliance attachment part must be performed in an oral cavity in order to lower the height of the prosthetic appliance attachment part. In this case, the prosthetic appliance attachment part is subject to excessive milling in the oral cavity so that the height of the prosthetic appliance attachment part is lowered to reduce the attachment area of the final prosthetic appliance. Accordingly, it is difficult to attach the final prosthetic appliance. In addition, even if the final prosthetic appliance is attached, the final prosthetic appliance may deviate from the position thereof due to horizontal and vertical pressures occurring in masticatory movement. Therefore, the prosthetic treatment cannot be completed, so that the integral-type implant buried into the alveolar bone must be removed and buried again.

According to a final example, when a gum is recessed (reduced) due to the oral cavity environment of a patient, so that a metallic gum penetration part is exposed (becomes a non-aesthetic state) so the surface of the metallic gum penetration part is shown, the non-aesthetic state to expose the gum penetration part cannot be solved except that the integral-type implant buried into the alveolar bone must be removed and buried again.

### [Disclosure]

### [Technical Problem]

The present invention has following objects to solve the inconvenience of an operator who must perform a milling work in an oral cavity with respect to a prosthetic appliance attachment part in match with the shape of the final prosthetic to be manufactured according to the relationships between surrounding teeth in the oral cavity and a problem that the tissues of a patient may be damaged and the prosthetic appliance attachment part has a small milling area, so that the final prosthetic appliance may not be attached or may deviate from the position thereof due to the masticatory pressure, so the masticatory function cannot be performed.

An object of the present invention is to provide an integral-type implant having a structure in which various final prosthetic appliances manufactured in match with the relationship with surrounding teeth can be attached in the state that the prosthetic appliance attachment part is not subject to milling and do not deviate from the positions thereof due to the masticatory pressure after the attachment is performed.

Another object of the present invention is to provide an integral-type implant having a structure in which an aesthetic customized prosthetic appliance, which includes the gum penetration part manufactured and treated in a natural tooth color, can be attached to a prosthetic appliance attachment part in order to solve the problem that a gum is recessed (reduced) due to the oral cavity environment of a patient, so that a metallic gum penetration part is exposed (becomes a non-aesthetic state) so the surface of the metallic gum penetration part is shown.

### [Technical Solution]

In order to accomplish the above object, the present invention is realized by embodiments having following configurations.

The integral implant according to the present invention preferably includes an intraosseous implant part 100 intended to be buried in an alveolar bone 810, a gum penetration part 310 provided integrally with an upper portion of the intraosseous implant part 100 and intended to be buried in a gum 800 to cover the alveolar bone, a prosthetic appliance attachment part 330 provided integrally with an upper portion of the bum penetration part 310 to attach a final prosthetic appliance 700, which is molded in a dental technical laboratory or formed in CAD/CAM, thereto, and a prosthetic appliance attachment central hole 500 having a hole extending from an upper end surface of the prosthetic appliance attachment part 330 toward the intraosseous implant part such that the final prosthetic appliance 700 is attached to an inner surface of the hole. The prosthetic appliance attachment part has a height in a range of 0.5 mm to 3.5 mm, has a diameter reduced upward from a lower diameter of the prosthetic appliance attachment part, and has an outer circumferential surface inclined at an angle of about 5° or more about a longitudinal axis of the integral-type implant. The outer circumferential surface of the prosthetic appliance attachment part 330 has concavo-convex shapes forming a thread shape, concentric circles, concentric steps, or concentric waves which are intended for widening an attachment area of the final prosthetic appliance 700 to the integral-type implant.

In addition, preferably, the gum penetration part 310 is integrally formed with an upper portion of the intraosseous implant part 100, and has a height in a range of 0.3 mm to 8 mm.

Preferably, the prosthetic appliance attachment part 330 has an outer portion in various shapes including circle, oval, cross, or polygonal shapes when viewed in a longitudinal section.

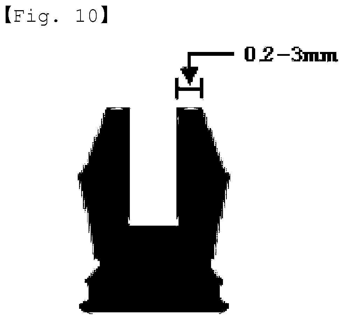

The prosthetic appliance attachment central hole 500 having a hole extending from an upper end surface of the prosthetic appliance attachment part 330 toward the intraosseous implant part 100 has an inner portion formed in various shapes such as a circle shape, an oval shape, a cross shape, a star shape, or a polygonal shape when viewed in the longitudinal section. Four or less prosthetic appliance attachment central holes are formed. An entrance diameter of the central hole is equal to or greater than a bottom diameter of the central hole. The prosthetic appliance attachment central hole has a depth of 1.5 mm to 15 mm. The linear distance between the entrance of the prosthetic appliance attachment central hole 500 and the upper end of the outer circumferential surface of the prosthetic appliance attachment part 330 is preferably formed in the range of 0.2 mm to 3 mm as shown in FIG. 10.

Preferably, the prosthetic appliance attachment part may include at least one cutting part, an anti-rotational surface, and anti-rotational groove in order to prevent the rotation of the final prosthetic appliance 700, which is attached, when the prosthetic appliance attachment central hole 500 and the longitudinal section of the outer portion of the prosthetic appliance attachment part 330 have a circular shape.

According to the present invention, there is provided an integral-type implant treatment method includes the steps of burying the intraosseous implant part of the integral-type implant in the alveolar bone, attaching a provisional prosthetic appliance for a predetermined time until implant osseointegration is achieved and the gum is cured, performing an impression work to manufacture the final prosthetic appliance after the provisional prosthetic appliance has been removed, forming the final prosthetic appliance in the dental technical laboratory or formed in CAD/CAM based on the relationship between surrounding teeth, and attaching the final prosthetic appliance to both of the prosthetic appliance attachment part and the inner surface of the prosthetic appliance attachment central hole. According to the above method, the integral-type implant is treated in the above sequence.

### [Advantageous Effects]

The present invention has following effects by the configuration.

Differently from the conventional integral-type implant treatment, since the integral-type implant according to the present invention has the prosthetic appliance attachment part 330 having a low height, the milling work of the prosthetic appliance attachment part in the oral cavity is not required, so that the treatment time is short, and the damage to surrounding soft tissues, which may occur during the milling work in the oral cavity, can be avoided

In addition, differently from the conventional implant treatment procedure, the integral-type implant according to the present invention has a structure to overcome a disadvantage that the milling work is excessively performed with respect to the prosthetic appliance attachment part in the oral cavity to reduce the area of the prosthetic appliance attachment, so that the final prosthetic appliance cannot be attached, or the final prosthetic appliance deviates from the positions thereof due to the horizontal and vertical pressures that may occur in masticatory movement even if the final prosthetic appliance is attached. In addition, different from the conventional integral-type implant treatment, since it is unnecessary to remove the buried integral-type implant when the prosthetic treatment is not completed, or bury an implant in order to complete the prosthetic treatment, a patient may not be additionally damaged due to re-treatment, and can avoid an additional economic burden.

In addition, according to the integral-type implant of the present invention, in order to solve the problem of exposing the metallic surface of the gum penetration part when the gum of the patient is recessed (reduced), an aesthetic customized prosthetic appliance, which includes the gum penetration part molded in a dental technical laboratory or formed in CAD/CAM and treated in a natural tooth color, can be attached, so that a superior aesthetic effect can be made. Accordingly, the patient can have a feeling of great satisfaction.

The integral-type implant according to the present invention having the above effects is more economical and the treatment time of the integral-type implant is shortened. In addition, the implant treatment can be simply performed to reduce the damage to a patient, and the patient can greatly feel the satisfactory to an implant treatment result, so that the integral-type implant treatment can be popularized, which raises an industrially added value.

### [Description of Drawings]

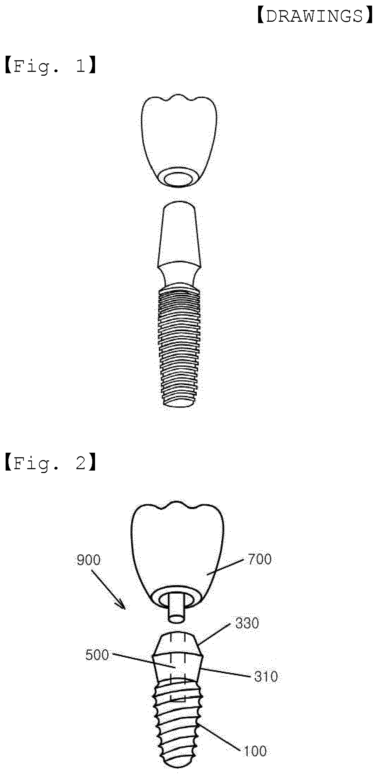

FIG. 1 is a perspective view showing an integral-type implant according to the related art.
FIG. 2 is a perspective view showing an integral-type implant according to the present invention.

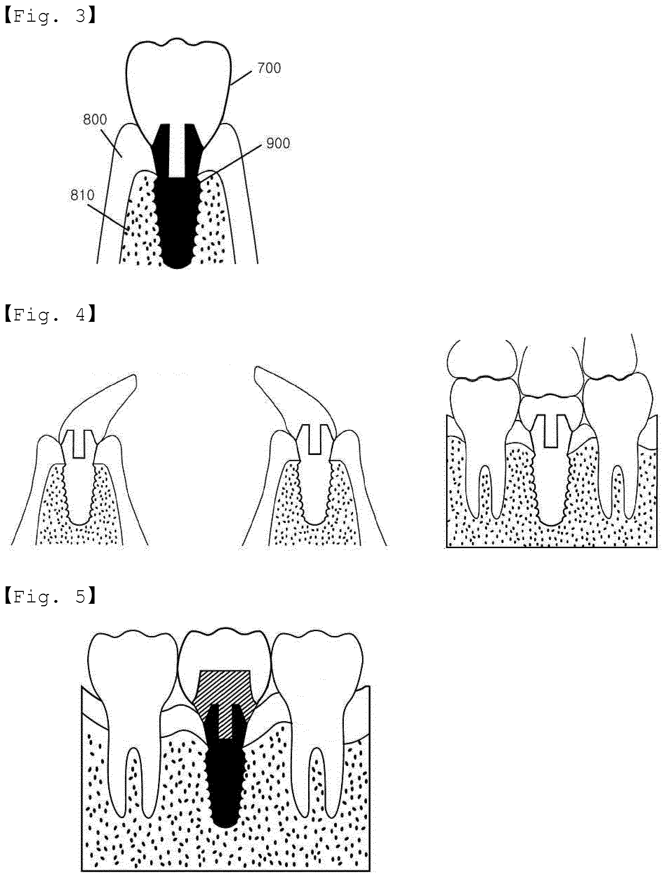

FIG.3 is a sectional view showing the integral-type implant according to the present invention after implant treatment is performed.
FIG. 4 is a sectional view showing the integral-type implant to which various types of prosthetic appliances are finally attached for the purpose of the harmony with surrounding teeth.
FIG. 5 is a sectional view showing the integral-type implant having aesthetic effect in gum recession according to the present invention.

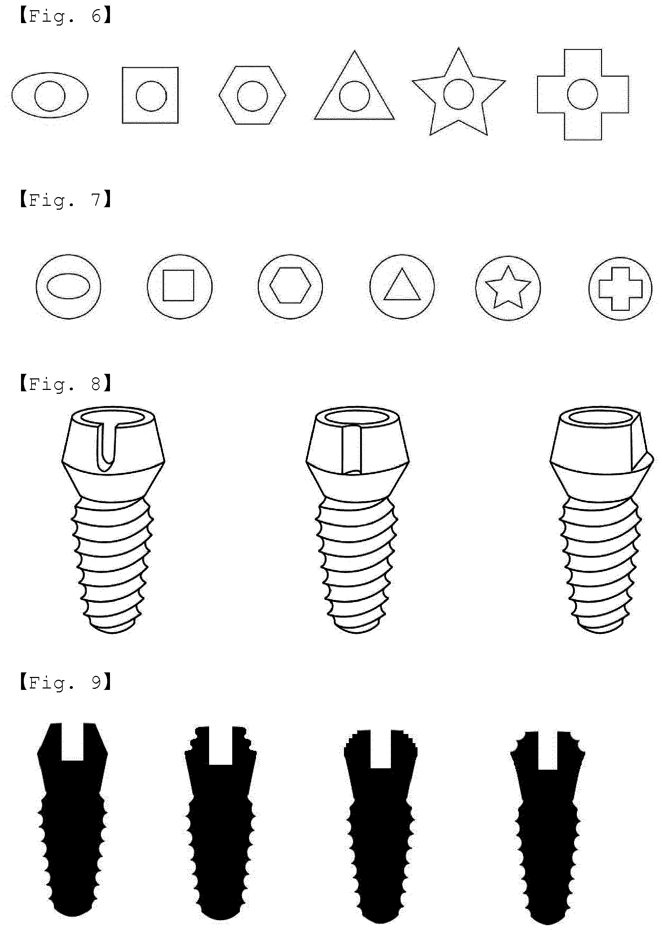

FIG. 6 illustrates various longitudinal section shapes of an outer portion of a prosthetic appliance attachment part.
FIG. 7 illustrates various longitudinal section shapes of the prosthetic appliance attachment central hole.
FIG. 8 is a perspective view showing various anti-rotational structures installed in the prosthetic appliance attachment part
FIG. 9 illustrates various sectional views showing an outer circumferential surface of the prosthetic appliance attachment part.

### [Best Mode]

### [Mode for Invention]

Hereinafter, the applicant will describe configuration according to the present embodiments with reference to accompanying drawings.

In the following description, if generally-known functions and structures are determined as making the subject matters of the present invention unclear, the detail of the generally-known functions and structures will be omitted.

An integral-type implant 900 according to the present invention includes an intraosseous implant part 100 provided integrally with a lower portion of the integral-type implant 900 and buried in an alveolar bone 810, a gum penetration part 310 provided integrally with an upper portion of the intraosseous implant part 100 and buried in a gum 800 to cover the alveolar bone 810, a prosthetic appliance attachment part 330 provided integrally with an upper portion of the gum penetration part 310 to attach a final prosthetic appliance 700, which is molded in a dental technical laboratory or formed in CAD/CAM, thereto, and a prosthetic appliance attachment central hole 500 having a hole extending from an upper end surface of the prosthetic appliance attachment part 330 toward the intraosseous implant part so that the final prosthetic appliance 700 is attached to an inner surface of the hole.

The intraosseous implant part 100 of the integral-type implant is buried into the alveolar bone 810 to serve as a root of a tooth, and provided an outer portion thereof with a concavo-convex pattern such as a thread to prevent the intraosseous implant part 100 from deviating from the alveolar bone 810 after the implant has been treated.

The gum penetration part 310 is integrally formed with an upper portion of the intraosseous implant part 100, and has a height of 0.3 mm to 8 mm preferably.

The prosthetic appliance attachment part 330 is integrally formed with an upper portion of the gum penetration part 310 and used to attach the final prosthetic appliance 700, which is molded in the dental technical laboratory or formed in CAD/CAM, or a customized prosthetic appliance 700 having an aesthetic effect thereto.

The prosthetic appliance attachment part has a height of 0.5 mm to 3.5 mm, and the prosthetic appliance attachment part 330 integrally formed with the upper portion of the gum penetration part has a diameter reduced upward from a lower diameter toward of the prosthetic appliance attachment part. The prosthetic appliance attachment part 330 has an outer circumferential surface inclined at 5°or more about a longitudinal axis of the integral-type implant 900.

Further, to widen an attachment area of the outer circumferential surface of the prosthetic appliance attachment part 330, various concavo-convex shapes such as a thread shape, a concentric circle shape, a step shape, or a wave shape may be formed on the outer circumferential surface of the prosthetic appliance attachment part 330. The prosthetic appliance attachment part 330 may be preferably configured to have a circle, oval, cross, or polygonal-shape outer portion when viewed in a longitudinal section.

The prosthetic appliance attachment central hole has a hole extending from an upper end surface of the prosthetic appliance attachment part 330 toward the intraosseous implant part has an inner portion formed in various shapes such as a circle shape, an oval shape, a cross shape, a star shape, or a polygonal shape when viewed in the longitudinal section. Four or less prosthetic appliance attachment central holes are formed. An entrance diameter of the central hole is equal to or greater than a bottom diameter of the central hole. The prosthetic appliance attachment central hole has a depth of 1.5 mm to 15 mm. The linear distance between the entrance of the prosthetic appliance attachment central hole 500 and the upper end of the outer circumferential surface of the prosthetic appliance attachment part 330 is preferably formed in the range of 0.2 mm to 3 mm as shown in FIG. 10.

In addition, the prosthetic appliance attachment part may preferably include at least one cutting part, an anti-rotational surface, and anti-rotational groove in order to prevent the rotation of the final prosthetic appliance 700, which is attached, when the prosthetic appliance attachment central hole 500 and the longitudinal section of the outer portion of the prosthetic appliance attachment part 330 have a circular shape.

The implant treatment procedure according to the configuration is as follows.
1. The intraosseous implant part of the integral-type implant is buried in the alveolar bone.
2. A provisional prosthetic appliance is attached for a predetermined time until implant osseointegration is achieved and the gum is cured.
3. An impression work is performed to manufacture the final prosthetic appliance after the provisional prosthetic appliance has been removed
4. The final prosthetic appliance is formed in the dental technical laboratory or formed in CAD/CAM based on the relationship between surrounding teeth.
5. The final prosthetic appliance, which is formed, is attached to both of the prosthetic appliance attachment part and the inner surface of the prosthetic appliance attachment central hole.

Although the exemplary embodiments of the present invention have been described, it is understood that the present invention should not be limited to these exemplary embodiments but by the scope of the claims.

### [Industrial Applicability]

The present invention provides an integral-type implant having a structure allowing the attachment of the final prosthetic appliance provided in various shapes in match with the relationship with surrounding teeth in the state that a prosthetic appliance attachment part is not milled, and preventing the final prosthetic appliance from deviating from the positions thereof by masticatory pressure after the attachment is performed, so that the present invention has industrial applicability.

## Claims

1. An integral-type implant comprising:
an intraosseous implant part (100) provided integrally with a lower portion of the integral-type implant and intended to be buried into an alveolar bone;
a gum penetration part (310) provided integrally with an upper portion of the intraosseous implant part (100) and intended to be buried into a gum (800) to cover the alveolar bone;
a prosthetic appliance attachment part (330) provided integrally with an upper portion of the gum penetration part (310) to attach a final prosthetic appliance (700), which is molded in a dental technical laboratory or formed in CAD/CAM, thereto; and
a prosthetic appliance attachment central hole (500) having a hole extending from an upper end surface of the prosthetic appliance attachment part (330) toward the intraosseous implant part such that the final prosthetic appliance (700) is attached to an inner surface of the hole, and
wherein the prosthetic appliance attachment part (330) has a height in a range of 0.5 mm to 3.5 mm, has a diameter reduced upward from a lower diameter of the prosthetic appliance attachment part, and has an outer circumferential surface inclined at an angle of about 5°or more about a longitudinal axis of the integral-type implant,
**characterized in that** the outer circumferential surface of the prosthetic appliance attachment part (330) has concavo-convex shapes forming a thread shape, concentric circles, concentric steps, or concentric waves which are intended for widening an attachment area of the final prosthetic appliance (700) to the integral-type implant.

2. The integral implant of claim 1, wherein the gum penetration part (310) is provided integrally with the upper portion of the intraosseous implant part (100), and has a height in a range of 0.3 mm to 8 mm.

3. The integral implant of any one of claims 1 or 2, wherein the prosthetic appliance attachment part (330) has an outer portion formed in various shapes including circle, oval, cross, or polygonal shapes when viewed in a longitudinal section.

4. The integral implant of claim 1, wherein four or less prosthetic appliance attachment central holes (500) are formed, the prosthetic appliance attachment central hole has an entrance diameter equal to or greater than a bottom diameter and a depth in a range of 1.5 mm to 15 mm, and a linear distance between an entrance of the prosthetic appliance attachment central holes (500) and the upper end of the outer circumferential surface of the prosthetic appliance attachment part is formed in a range of 0.2 mm to 3 mm.

5. The integral implant of claim 4, wherein the prosthetic appliance attachment central hole (500) has an inner portion in various shapes including circle, oval, cross, star, or polygonal shapes when viewed in the longitudinal section.

6. The integral implant of any one of the previous claims, wherein the prosthetic appliance attachment part includes at least one cutting part, an anti-rotational surface, and anti-rotational groove to prevent rotation of a prosthetic appliance.

7. A unit comprising an integral-type implant according to any one of claims 1 to 6 and a final prosthetic appliance (700).

## Patentansprüche

1. Integrales Implantat, Folgendes umfassend:
einen intraossären Implantatteil (100), der einstückig mit einem unteren Abschnitt des integralen Implantats bereitgestellt und dafür vorgesehen ist, in einen Alveolarknochen eingelassen zu werden,
einen Zahnfleisch-Penetrierungsteil (310), der einstückig mit einem oberen Abschnitt des intraossären Implantatteils (100) bereitgestellt und dafür vorgesehen ist, in ein Zahnfleisch (800) eingelassen zu werden, um den Alveolarknochen zu bedecken,
einen Protheseanwendungs-Befestigungsteil (330), der einstückig mit einem oberen Abschnitt des Zahnfleisch-Penetrierungsteils (310) bereitgestellt ist, um eine endgültige Protheseanwendung (700) daran zu befestigen, die in einem Dentaltechniklabor oder in CAD/CAM gebildet wird, und
eine Protheseanwendungs-Befestigungsmittelöffnung (500) mit einer Öffnung, die sich von einer oberen Endfläche des Protheseanwendungs-Befestigungsteils (330) zum intraossären Implantatteil erstreckt, so dass die endgültige Protheseanwendung (700) an einer Innenfläche der Öffnung befestigt ist, und
wobei der Protheseanwendungs-Befestigungsteil (330) eine Höhe in einem Bereich von 0,5 bis 3,5 mm aufweist, einen Durchmesser aufweist, der von einem unteren Durchmesser des Protheseanwendungs-Befestigungsteils nach oben verringert ist, und eine außen umlaufende Fläche aufweist, die in einem Winkel von etwa 5° oder mehr um eine Längsachse des integrierten Implantats geneigt ist,
**dadurch gekennzeichnet, dass** die außen umlaufende Fläche des Protheseanwendungs-Befestigungsteils (330) konkavokonvexe Formen aufweist, die eine Gewindeform, konzentrische Kreise, konzentrische Stufen oder konzentrische Wellen bilden, die dafür vorgesehen sind, einen Befestigungsbereich der endgültigen Protheseanwendung (700) für das integrale Implantat zu weiten.

2. Integrales Implantat nach Anspruch 1, wobei der Zahnfleisch-Penetrierungsteil (310) einstückig mit dem oberen Abschnitt des intraossären Implantatteils (100) bereitgestellt ist und eine Höhe im Bereich von 0,3 bis 8 mm aufweist.

3. Integrales Implantat nach Anspruch 1 oder 2, wobei der Protheseanwendungs-Befestigungsteil (330) einen Außenabschnitt aufweist, der, betrachtet in einem Längsschnitt, in verschiedenen Formen gebildet ist, einschließlich Kreis-, Oval-, Kreuz- oder Polygonformen.

4. Integrales Implantat nach Anspruch 1, wobei vier oder weniger Protheseanwendungs-Befestigungsmittelöffnungen (500) gebildet sind, wobei die Protheseanwendungs-Befestigungsmittelöffnung einen Eingangsdurchmesser gleich oder größer als ein Bodendurchmesser und eine Tiefe in einem Bereich von 1,5 bis 5 mm aufweist und ein linearer Abstand zwischen einem Eingang der Protheseanwendungs-Befestigungsmittelöffnungen (500) und dem oberen Ende der außen umlaufenden Fläche des Protheseanwendungs-Befestigungsteils in einem Bereich von 0,2 bis 3 mm gebildet ist.

5. Integrales Implantat nach Anspruch 4, wobei die Protheseanwendungs-Befestigungsmittelöffnung (500) einen inneren Abschnitt in verschiedenen Formen aufweist, einschließlich Kreis- Oval-, Kreuz-, Stern- oder Polygonformen, betrachtet in einem Längsschnitt.

6. Integrales Implantat nach einem der vorhergehenden Ansprüche, wobei der Protheseanwendungs-Befestigungsteil mindestens einen Schneideteil, eine Drehungshemmfläche und eine Drehungshemmrille beinhaltet, um eine Drehung einer Protheseanwendung zu verhindern.

7. Einheit, umfassend ein integrales Implantat nach einem der Ansprüche 1 bis 6 und eine endgültige Protheseanwendung (700) umfassend.

## Revendications

1. Implant de type intégré comprenant :
une partie formant implant intraosseux (100) prévue d'un seul tenant avec une partie inférieure de l'implant de type intégré et destinée à être enfouie dans un os alvéolaire ;
une partie de pénétration dans la gencive (310) prévue d'un seul tenant avec une partie supérieure de la partie formant implant intraosseux (100) et destinée à être enfouie dans une gencive (800) pour couvrir l'os alvéolaire ;
une partie de fixation d'appareil de prothèse (330) prévue d'un seul tenant avec une partie supérieure de la partie de pénétration dans la gencive (310) pour fixer un appareil de prothèse définitif (700), qui est moulé dans un laboratoire de technique dentaire ou formé par CAO/FAO, sur celle-ci ; et
un trou central de fixation d'appareil de prothèse (500) comportant un trou s'étendant depuis une surface d'extrémité supérieure de la partie de fixation d'appareil de prothèse (330) vers la partie formant implant intraosseux de sorte que l'appareil de prothèse définitif (700) se fixe à une surface interne du trou, et
dans lequel la partie de fixation d'appareil de prothèse (330) a une hauteur dans une plage de 0,5 mm à 3,5 mm, a un diamètre réduit en montant à partir d'un diamètre inférieur de la partie de fixation d'appareil de prothèse, et présente une surface circonférentielle externe inclinée selon un angle supérieur ou égal à environ 5° par rapport à un axe longitudinal de l'implant de type intégré,
**caractérisé en ce que** la surface circonférentielle externe de la partie de fixation d'appareil de prothèse (330) présente des formes concavo-convexes formant une forme de filet, des cercles concentriques, des gradins concentriques ou des vagues concentriques qui sont destinées à élargir une zone de fixation de l'appareil de prothèse définitif (700) à l'implant de type intégré.

2. Implant intégré selon la revendication 1, dans lequel la partie de pénétration dans la gencive (310) est prévue d'un seul tenant avec la partie supérieure de la partie formant implant intraosseux (100), et a une hauteur dans une plage de 0,3 mm à 8 mm.

3. Implant intégré selon l'une quelconque des revendications 1 ou 2, dans lequel la partie de fixation d'appareil de prothèse (330) comporte une partie externe présentant des formes diverses comprenant des formes de cercle, d'ovale, de croix, ou de polygone vues en coupe longitudinale.

4. Implant intégré selon la revendication 1, dans lequel au plus quatre trous centraux de fixation d'appareil de prothèse (500) sont formés, le trou central de fixation d'appareil de prothèse a un diamètre d'entrée supérieur ou égal à un diamètre de fond et une profondeur dans une plage de 1,5 mm à 15 mm, et une distance linéaire entre une entrée des trous centraux de fixation d'appareil de prothèse (500) et l'extrémité supérieure de la surface circonférentielle externe de la partie de fixation d'appareil de prothèse est formée dans une plage de 0,2 mm à 3 mm.

5. Implant intégré selon la revendication 4, dans lequel le trou central de fixation d'appareil de prothèse (500) comporte une partie interne de formes diverses comprenant des formes de cercle, d'ovale, de croix, d'étoile ou de polygone vues en coupe longitudinale.

6. Implant intégré selon l'une quelconque des revendications précédentes, dans lequel la partie de fixation d'appareil de prothèse comporte au moins une partie de découpe, une surface anti-rotation et une rainure anti-rotation pour empêcher la rotation d'un appareil de prothèse.

7. Unité comprenant un implant de type intégré selon l'une quelconque des revendications 1 à 6 et un appareil de prothèse définitif (700).
